# EUROPÄISCHE PATENTSCHRIFT

(11) **EP 3 344 896 B1**
(45) Veröffentlichungstag und Bekanntmachung des Hinweises auf die Patenterteilung: **25.11.2020**
(21) Anmeldenummer: 16759733.5
(22) Anmeldetag: 29.08.2016
(51) Int. Cl.: F16F 15/173, F16C 17/10

(54) **DREHSCHWINGUNGSDÄMPFER MIT LAGEREINRICHTUNG**
TORSIONAL VIBRATION DAMPER HAVING A BEARING DEVICE
AMORTISSEUR DE VIBRATIONS DE TORSION POURVU D'UN DISPOSITIF D'APPUI

(30) Priorität: 31.08.2015 DE 102015114534
(43) Veröffentlichungstag der Anmeldung: 11.07.2018
(73) Patentinhaber: Hasse & Wrede GmbH, 12681 Berlin (DE)
(72) Erfinder: BOHMEYER, Stephan, 15366 Hoppegarten (DE); STEIDL, Michael, 10318 Berlin (DE); REINSPERGER, Nobert, 15366 Hoppegarten (DE)
(74) Vertreter: Specht, Peter
(86) Internationale Anmeldenummer: PCT/EP2016/070340
(87) Internationale Veröffentlichungsnummer: WO 2017/037031

(56) Entgegenhaltungen:
- EP-A1- 2 824 362
- DE-A1- 19 519 261
- DE-A1-102009 041 452
- JP-A- 2007 177 852
- JP-B1- S4 928 869

## Beschreibung

Die Erfindung betrifft einen Drehschwingungsdämpfer nach dem Oberbegriff des Anspruchs 1.

Drehschwingungsdämpfer dieser Art dienen an einer Maschinenwelle - häufig einer Motorkurbelwelle - zur Dämpfung von Drehschwingungen. An der Maschinenwelle wird das Dämpfergehäuse des Drehschwingungsdämpfers drehsteif mit einer Maschinenwelle - häufig einer Motorkurbelwelle - verbunden, deren Drehschwingungen gedämpft werden sollen. Das Dämpfergehäuse und der Schwungring folgen der mittleren Drehgeschwindigkeit der Maschinenwelle ohne Schlupf. Ihre Drehschwingungen hingegen, die sich der gleichmäßigen Drehung überlagern, übertragen sich zunächst nur auf das Dämpfergehäuse. Der Schwungring würde gleichförmig rotieren, wenn ihn nicht ein viskoses Fluid - beispielsweise ein Silikonöl - das den engen Scherspalt ausfüllt, an das Dämpfergehäuse ankoppeln würde. Diese Koppelung ist elastisch und dämpfungsbehaftet. Infolgedessen treten zwischen Dämpfergehäuse und Schwungring Relativ-Drehwinkel von z. B. bis zu ± 1 Winkelgrad im Takte der erregenden Wellenschwingung auf. Da sich der Schwungring also in der Dämpfergehäusekammer relativ zum Dämpfergehäuse etwas drehen kann, benötigt er zu seiner Lagerung in der Regel wenigstens eine Lagereinrichtung.

Eine wesentliche Anforderung bei der Auslegung der Lagereinrichtung eines Drehschwingungsdämpfers ist, dass der in der Dämpferkammer befindliche Schwungring mit der Lagereinrichtung frei beweglich gelagert wird und dass eine Kollision mit der Dämpferkammer bzw. mit dem Dämpfergehäuse, welches die Dämpferkammer ausbildet, ausgeschlossen ist. Dies erfolgt durch die Festlegung geeigneter Nominalwerte und Toleranzen von Schwungring, Lagereinrichtung und Dämpferkammer. Häufig ist der Bauraum für den Drehschwingungsdämpfer an einem Motor bzw. einer Verbrennungskraftmaschine begrenzt. Gleichzeitig steigen aufgrund der Weiterentwicklung von Motoren bzw. Verbrennungskraftmaschinen die Anforderungen an die Funktion des Drehschwingungsdämpfers.

Als Lagereinrichtung haben sich insbesondere lose eingelegte Lagerelemente bewährt, die ein Gleitlager zwischen Schwungring und Dämpferkammer ausbilden. So ist es bekannt, ein an einer Stelle seines Umfangs geschlitztes Radialband mit zwei Axialbändern zu kombinieren - EP 0 423 243 - oder als Lagereinrichtung eine Vielzahl axialer Führungsplättchen als Lagerelemente vorzusehen - GB 1 307 607. Zum technologischen Hintergrund wird ferner die DE 10 2009 041 452 A1.

Aus der gattungsgemäßen DE 195 19 261 A1 ist ein Drehschwingungsdämpfer nach dem Oberbegriff des Anspruchs 1 mit einer Lagereinrichtung zur Führung eines Schwungringes in einem Dämpfergehäuse bekannt, bei der als Lagereinrichtung wenigstens ein im Querschnitt L-förmiges Lagerelement vorgesehen ist, das derart in das Dämpfergehäuse eingelegt ist, dass ein Radiallagerabschnitt des L-förmigen Lagerelements den Schwungring gegenüber dem Dämpfergehäuse in radialer Richtung lagert und führt und dass ein Axiallagerabschnitt des L-förmigen Lagerelements eine axiale Lagerung und Führung gewährleistet. Zwischen dem Schwungring und dem Dämpfergehäuse bestehen Scherspalte, die mit dem viskosen Fluid gefüllt sind. Nach Varianten dieser Schrift ist vorgesehen, dass zwei der L-förmigen Lagerelemente im inneren oder äußeren Umfangsspalt des Schwungrings angeordnet sind, oder dass eines der L-förmigen Lagerelemente mit einem Axialband kombiniert wird. Die L-förmigen Lagerelemente können als umfangsgeschlossener Winkelring ausgelegt sein oder an einer Stelle ihres Umfangs geschlitzt ausgebildet sein.

Aus der DE 101 26 477 C1 ist es bekannt, dass die L-förmigen Lagerelemente an einer Stelle des Umfangs eine Stoßfuge aufweisen, welche durch mindestens einen oder mehrere Materialstege überbrückt ist, so dass ein umfangsgeschlossener Ring gebildet wird. Vorzugweise sind diese Materialstege so ausgestaltet, dass sie bei thermischer Längenzunahme der Buchse aufreißen oder sich elastisch-plastisch verformen. Nach einer weiteren Variante der DE 101 26 477 C1 ist die Stoßfuge durch einen oder zwei als Reißstege ausgebildete Materialstege überbrückt, der/die in der Flucht der Radiallagerpartie und/oder in der Flucht der Axiallagerpartie liegt/liegen. Ebenfalls bekannt ist, dass die Stoßfuge durch einen als Mäandersteg ausgebildeten Materialsteg überbrückt ist und dass der Materialsteg ein Filmsteg ist.

Ausgehend von dem gattungsgemäßen Stand der Technik hat die Erfindung die Aufgabe, die Lagerung zu verbessern.

Die Erfindung löst diese Aufgabe durch den Gegenstand des Anspruchs 1. Geschaffen wird ein Viskositäts-Drehschwingungsdämpfer, der folgende Merkmale aufweist: ein ringförmiges Dämpfergehäuse, das eine Dämpferkammer begrenzt; ein in der Dämpferkammer angeordneter Schwungring; eine den Schwungring im Dämpfergehäuse lagernde Lagereinrichtung, die wenigstens ein Lagerelement aufweist, das einen Axiallagerbereich und/oder einen Radiallagerbereich aufweist, ein mit einem viskosen Fluid gefüllter Scherspalt zwischen dem Schwungring und dem Dämpfergehäuse, wobei umfangsverteilt an dem wenigstens einen Lagerelement mehrere der Axiallagerabschnitte und/oder mehrere der Radiallagerabschnitte vorgesehen sind.

Der Gegenstand des Anspruchs 1 bringt eine ganze Reihe von Vorteilen mit sich. Da sich die Axiallagerabschnitte und/oder die Radiallagerabschnitte nicht mehr über den gesamten Umfang oder fast den gesamten Umfang des Lagerelementes erstrecken, sondern da lediglich umfangsverteilt drei oder mehr Axial- und/oder Radiallagerabschnitte vorgesehen sind, wird der Raum, welchen das jeweilige Lagerelement im Scherspalt ausfüllt, reduziert und es entsteht entsprechend zusätzlicher Raum, der von dem viskosen Medium ausgefüllt werden kann und in dem eine viskose Kopplung zwischen dem Schwungring und dem Dämpfergehäuse möglich ist. Dies ermöglicht es, den nutzbaren Scherspalt zu maximieren und die Anbindung zwischen dem Schwungring und dem Dämpfergehäuse zu optimieren. Als die Axiallagerabschnitte und/oder als die Radiallagerabschnitte werden solche Abschnitte bezeichnet, in welche in axialer bzw. radialer Richtung im Betrieb fortlaufend eine Gleitlagerung zwischen dem Dämpfergehäuse und dem Schwungring durch diese Abschnitte realisierbar ist. Vorzugsweise sind wenigstens drei der Axiallagerabschnitte und/oder der Radiallagerabschnitte umfangsverteilt an dem einen oder den zwei oder mehr Lagerelementen vorgesehen.

Um die Bereiche, die zusätzlich von dem viskosen Medium ausgefüllt werden, groß zu gestalten, beträgt die aufsummierte Umfangslänge der Axial- und/oder Radiallagerabschnitte nach einer bevorzugten Ausführungsform weniger als 50%, insbesondere weniger als 40% und besonders bevorzugt weniger als 30% des Umfangs des gesamten Lagerelements.

Bevorzugt ergänzen sich jeweils umfangsverteilt die Radiallagerabschnitte und die Axiallagerabschnitte zu im Querschnitt L-förmigen Lagerabschnitten, die umfangsverteilt am Lagerelement vorgesehen sind. Durch solche L-förmige Lagerabschnitte wird der Schwungring besonders gut zentriert und geführt. Die Montage gestaltet sich ferner bei dieser Ausgestaltung als sehr einfach, da das so gestaltete Lagerelement gut im Scherspalt platzierbar ist, bevor das in Regel zur Montage zunächst einseitig offene Dämpfergehäuse nach dem Einlegen der Lagerelemente und des Schwungrings geschlossen und an einer noch später zu schließenden Einfüllöffnung mit dem viskosen Fluid befüllt wird.

Nach einer bevorzugten Variante weist das wenigstens eine Lagerelement ferner mehrere Materialstege auf, welche jeweils zwei benachbarte der Axiallagerabschnitte und/oder zwei der der Radiallagerabschnitte miteinander verbinden. Diese Materialstege erleichtern die Montage der Lagerelemente erheblich. Sie sind vorzugsweise so bemessen, dass an ihnen im Betrieb keine Gleitlagerung oder jedenfalls nur in sehr geringem Maße eine Gleitlagerung stattfindet. Dabei sind verschiedene Varianten denkbar. So ist es denkbar, dass mehrere der Axiallagerabschnitte durch die Materialstege miteinander verbunden sind und dass die Materialstege als Axialstege ausgebildet sind. Alternativ oder optional ist es aber auch denkbar, dass mehrere der Radiallagerabschnitte durch die Materialstege miteinander verbunden sind und dass die Materialstege als Radialstege ausgebildet sind. Werden nur Radial- oder Axialstege realisiert, entsteht ein vergrößerter Raum für das viskose Medium. Sind sowohl Radial und Axialstege vorgesehen, werden die Stabilität des Lagerelementes und dessen Montage erleichtert. Die Materialstege dienen zudem als Scherspaltweitenbegrenzung und ggf. auch zu kurzzeitigen Notlagerung, falls im Betrieb starke Belastungen in ihren Bereichen auftreten.

Dabei ist es weiter vorteilhaft, wenn eine Banddicke des Lagerelements im Bereich der Materialstege geringer ist als eine Banddicke in den Axiallagerabschnitten und/oder in den Radiallagerabschnitten, denn derart kann der Raum, den das Lagerelement einnimmt, weiter verringert werden.

Zur Realisierung einer guten Lagerung ist es zweckmäßig, wenn zwei der Lagerelemente in der Dämpferkammer angeordnet sind. Es können zwar theoretisch auch mehrere der Lagerelemente vorgesehen sein. In der Regel genügen aber zwei Lagerelemente zur Lagerung des Schwungringes. Damit ist auch die Montage einfach.

Es ist vorteilhaft, wenn die Dämpferkammer einen im Wesentlichen rechteckigen Querschnitt mit inneren und äußeren Eckbereichen aufweist. Dann können nach einer Variante zwei der Lagerelemente in den äußeren Eckbereichen der Dämpferkammer zwischen dem Dämpfergehäuse und dem Schwungring angeordnet sein. Diese Ausgestaltungsform lässt sich besonders leicht montieren. Diese Ausgestaltung ist vorteilhaft aber nicht zwingend. Es sind auch andere Querschnitte wie C-formen und dgl. denkbar.

Alternativ können zwei der Lagerelemente in den inneren Eckbereichen der Dämpferkammer zwischen dem Dämpfergehäuse und dem Schwungring angeordnet sein.

Denkbar ist schließlich auch, wenn eines der Lagerelemente in einem der äußeren Eckbereiche angeordnet ist und ein weiteres der Lagerelemente in einem der inneren Eckbereiche der Dämpferkammer zwischen dem Dämpfergehäuse und dem Schwungring angeordnet ist. Dabei wird bevorzugt, wenn die Lagerelemente in diagonal einander in der Dämpferkammer gegenüberliegenden Eckbereichen angeordnet sind, da dies den Schwungring gut zentriert.

Vorzugsweise sind die Lagerelemente der Lagereinrichtung ohne Vorspannung zwischen dem Dämpfergehäuse und dem Schwungring angeordnet, um eine gute Lagerung zu gewährleisten. Dies wird besonders bevorzugt, da derart eine gute Lagerung sichergestellt wird. Als Material für die Lagerelemente der Lagereinrichtung wird bevorzugt Kunststoff eingesetzt. Das viskose Fluid ist bevorzugt ein Silikonöl. Die Lagerelemente können aber auch im Einzelfall mit Vorspannung montiert werden.

Im Rahmen der Erfindung realisierbar ist auch eine Ausführung der Lagereinrichtung, bei welcher wenigstens eines der Lagerelemente lediglich Axiallagerabschnitte und nur diese verbindende Axialstege geringerer Banddicke aufweist und/oder eine Ausführung, bei der eines der Lagerelemente lediglich Radiallagerabschnitte und nur diese verbindende Radialstege geringerer Banddicke aufweist. Diese Lagerelemente werden dann bevorzugt - nicht aber zwingend - mit Lagerelementen kombiniert, bei welchen sich jeweils umfangsverteilt die Radiallagerabschnitte und die Axiallagerabschnitte zu im Querschnitt L-förmigen Lagerabschnitten ergänzen. Dann führt eines der Lagerelemente den Ring vorzugsweise in radialer und axialer Richtung und das andere den Schwungring nur in einer dieser Richtungen.

Vorteilhafte Ausgestaltungen der Erfindung sind den übrigen Unteransprüchen zu entnehmen.

Nachfolgend wird die Erfindung unter Bezug auf die Zeichnungen anhand von Ausführungsbeispielen näher beschrieben. Es zeigen:
- Fig. 1: eine Schnittansicht durch eine Ringhälfte eines ersten ringförmigen Viskositäts-Drehschwingungsdämpfers;
- Fig. 2: in a) eine perspektivische Ansicht eines als Ring ausgebildeten Lagerelements und in b) eine Detailansicht des Lagerelements aus Fig. 2a.
- Fig. 3: eine Schnittansicht durch eine Ringhälfte eines zweiten ringförmigen Viskositäts-Drehschwingungsdämpfers;
- Fig. 4: in a) eine perspektivische Ansicht eines weiteren als Ring ausgebildeten Lagerelements und in b) eine Detailansicht des Lagerelements aus Fig. 4a.
- Fig. 5: eine Schnittansicht durch eine Ringhälfte eines dritten ringförmigen Viskositäts-Drehschwing ungsdämpfers;

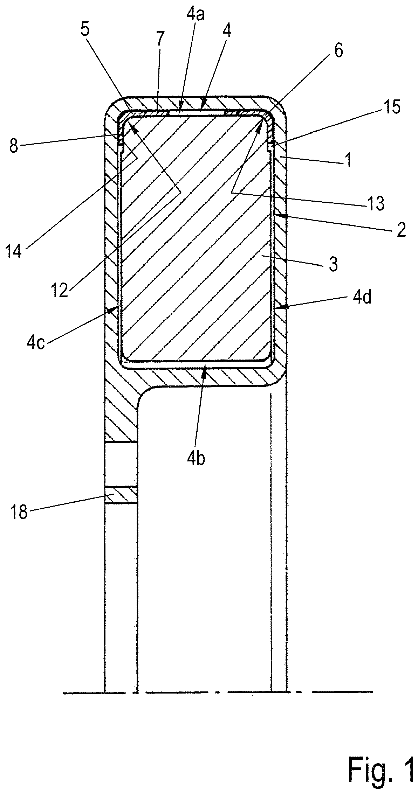

Fig. 1 zeigt einen Viskositäts-Drehschwingungsdämpfer mit einem ringförmigen Dämpfergehäuse 1, das eine Dämpferkammer 2 begrenzt. Das Dämpfergehäuse 1 ist drehbar mit einer hier nicht dargestellten Maschinenwelle M - insbesondere einer Motorkurbelwelle - verbindbar, deren Drehschwingungen gedämpft werden sollen.

In die Dämpferkammer 2 ist ein umfangsgeschlossener Schwungring 3 eingesetzt. Dieser Schwungring 3 weist hier in bevorzugter - nicht aber zwingender - Ausgestaltung einen im Wesentlichen rechteckigen Querschnitt auf. Der Schwungring 3 wird durch eine Lagereinrichtung im Dämpfergehäuse 1 gelagert. Diese ist vorzugsweise lose - d.h. ohne Vorspannung - zwischen dem Schwungring 3 und der Innenwand des Dämpfergehäuses 1 angeordnet. Zwischen der Innenwand des Dämpfergehäuses 1 und dem Schwungring 3 ist in der Dämpferkammer 2 ein Scherspalt 4 ausgebildet, der mit einem Dämpfungsmedium, insbesondere einem viskosen Fluid, befüllt ist.

Die Lagereinrichtung weist Lagerelemente 5, 6 auf, die ringförmig ausgebildet sind. Die Lagerelemente 5, 6 dienen dazu, den Schwungring 3 im Dämpfergehäuse 1 relativ zum Dämpfergehäuse drehbar zu lagern. Diese Lagerelemente 5, 6 bestehen vorzugsweise aus Kunststoff und bilden jeweils Gleitlager zwischen dem Lagergehäuse 1 und dem Schwungring 3 aus. Die Lagerelemente 5, 6 sind vorzugsweise einstückig, was die Handhabung besonders einfach macht oder aber in weiteren Ausführungen zwei- oder mehrstückig ausgebildet.

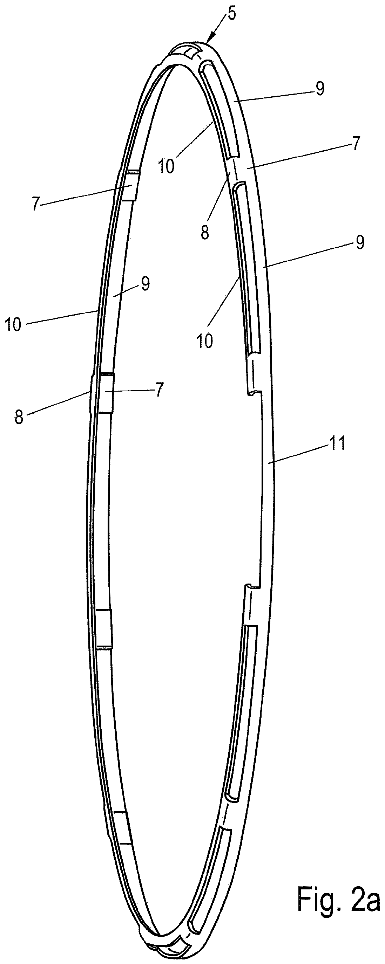

Fig. 2a zeigt das Lagerelement 5. Das andere Lagerelement 6 ist hier identisch wie das Lagerelement 5 ausgebildet, so dass die nachfolgende Beschreibung auch für das Lagerelement 6 zutrifft. Die identische Ausbildung der Lagerelemente 5, 6 hat den Vorteil, dass nur eine Bauart der Lagerelemente 5 für die Fertigung bereitgestellt werden muss. Es ist aber auch denkbar, die beiden Lagerelemente 5, 6 unterschiedlich zu gestalten, so dann, wenn der Schwungring 3 im Querschnitt nicht rechteckig ausgestaltet ist sondern beispielsweise gestuft, so dass eine Lagerung in axialer Richtung auf verschiedenen Durchmessern realisiert werden muss (hier nicht dargestellt).

Das Lagerelement 5 ist ringförmig ausgebildet und weist umfangsverteilt wenigstens zwei oder mehr Axiallagerabschnitte 8 und/oder wenigstens zwei oder mehr Radiallagerabschnitte 8 auf. Nach Fig.1 sind die Axiallagerabschnitte 8 und die Radiallagerabschnitte 7 umfangsverteilt bevorzugt an korrespondierenden Winkelpositionen angeordnet, so dass - im Querschnitt der Fig. 1 - betrachtet umfangsverteilt L-förmige Lagerabschnitte gebildet werden, deren Schenkel jeweils einer der Axiallagerabschnitte 8 und einen der Radiallagerabschnitte 7 ausbilden.

Im Scherspalt 4 sind zwischen dem Dämpfergehäuse 1 und dem Schwungring 3 Scherspalt-Axialbereiche 4c, 4d und Scherspalt-Radialbereiche 4a, 4b ausgebildet. Die Axiallagerabschnitte 8 liegen bei sämtlichen Ausgestaltungen in den Scherspalt-Axialbereichen 4c, 4d und die Radiallagerabschnitte 7 in den Scherspalt-Radialbereichen 4a, 4b. Als "radial" wird in der Technik der Drehschingungsdämpfer und in dieser Anmeldung in den Figuren und der Beschreibung die Richtung einer nicht dargestellten Motorwelle bei konstantem Radius bezeichnet (die der Richtung der unteren strichpunktitierten Linie in Fig. 1 entspricht), als "axial" die Richtung senkrecht dazu bei variablem Radius.

Die L-förmigen Lagerabschnitte 5 mit jeweils einem der Radiallagerabschnitte 7 und einem der Axiallagerabschnitte 8 erstrecken sich nicht über den gesamten Umfang des ringförmigen Lagerelements 5. Sie sind vielmehr nur abschnittsweise vorgesehen. Sie erstrecken sich aufsummiert in Umfangsrichtung vorzugsweise über weniger als 50 Prozent, vorzugsweise über weniger als 40 Prozent, insbesondwere weniger als 30% des gesamten Umfangs des Lagerelements 5.

Benachbarte Axiallagerabschnitte 8 des Lagerelements 5 sind über Axialstege 10 in Umfangsrichtung miteinander verbunden. Benachbarte Radiallagerabschnitte 7 sind über Radialstege 9 in Umfangsrichtung miteinander verbunden.

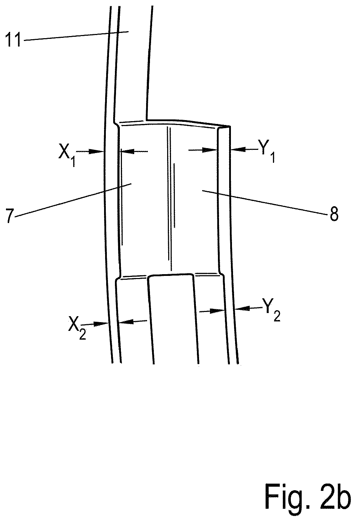

Fig. 2b zeigt, dass lediglich an einer Stelle des Umfangsbereichs des Lagerelements 5 vorgesehen ist, dass ein Brückensteg 11 (Fig. 2b) zwischen zwei der Axiallagerabschnitte 8 oder der Radiallagerabschnitt 7 in Radialrichtung und /oder in Umfangsrichtung vorzugsweise dünner als die Radialstege 9 bemessen ist, dass er beim Einsetzen in das Dämpfergehäuse aufreißen kann, so dass nach dem Einsetzen des Lagerelements 5 im Betrieb in er Regel kein umfangsgeschlossener Lagerring mehr ausgebildet ist sondern ein an einer Stelle seines Umfangs offener Lagerring. Hierdurch können unterschiedliche Durchmesser und Toleranzlagen ausgeglichen werden. Für nähere Erörterungen und Varianten derartiger Brückenstege 11 sei auf die eingangs erwähnte DE 101 26 477 C1 verwiesen.

Nach einer alternativen Ausgestaltung könnte das Lagerelement 5 auch an einer Stelle seines Umfangs geschlitzt ausgebildet/gefertigt sein, um Toleranzen auszugleichen.

Da sich die Lagerabschnitte 8, 9 sich nicht mehr fast über den gesamten Umfang des Lagerrings erstrecken, sondern nur noch winkelverteilt in Abschnitten vorgesehen sind, entstehen Bereiche, die zusätzlich von dem viskosen Medium ausgefüllt werden können, so dass zusätzliche Bereiche im Vergleich zum gattungsgemäßen Stand der Technik gebildet werden können, in denen eine viskose Ankopplung zwischen dem Schwungring 3 und dem Dämpfergehäuse 1 möglich ist. Dies ermöglicht es, den Scherspalt zu maximieren und die Ankopplung zwischen dem Schwungring 3 und dem Dämpfergehäuse 1 zu optimieren. Um die Bereiche, die zusätzlich von dem viskosen Medium ausgefüllt werden, groß zu gestalten, sollte die aufsummierte Umfangslänge der Axiallagerabschnitte 8 und/oder der Radiallagerabschnitte 7 vorzugsweise weniger als die genannten 50% des Umfangs, vorzugsweise über weniger als 40 Prozent, insbesondere weniger als 30% des Lagerelements und/oder des Schwungrings 3 betragen.

Vorzugsweise ist die Banddicke X1 und/oder Y1 der Axiallagerabschnitte 8 und/oder der Radiallagerabschnitte 7 größer als die Banddicke X2 und/oder Y2 im Bereich der die Lagerabschnitte verbindenden Axial- und Radialstege 10, 9. Vorzugsweise ist zudem die axiale Breite der Axiallagerabschnitte 8 und/oder die radiale Breite der Radiallagerabschnitte 7 größer als in den Lagerabschnitten selbst. Auch dies bringt jeweils den Vorteil zusätzlichen Raums für viskoses Fluid zur Kopplung zwischen dem Schwungring 3 und dem Dämpfergehäuse 1 mit.

Die Lagerelemente 5,6 können in der Dämpferkammer 2 in die äußere Eckbereiche 12, 13 zwischen dem Schwungring 3 und dem Dämpfergehäuse 1 gesetzt werden. Dazu weist der Schwungring 3 im Bereich der korrespondierenden Eckbereichen 12, 13 vorzugsweise sich jedenfalls radial oder über Eck radial und axial erstreckende Aussparungen 14, 15 auf, deren Bautiefe geringer ist als die der Banddicke der Lagerelemente 5, 6, was vorteilhaft ist, um den Scherspalt 4 schmal zu gestalten und um den Raum, den die Lagerelemente 5, 6 einnehmen gering zu halten sowie um geeignet bemessenen Raum für das viskose Fluid im Scherspalt 4 zu schaffen.

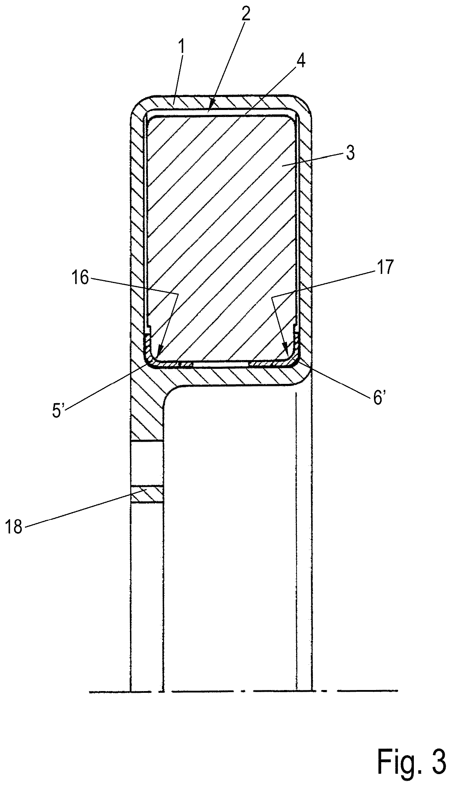

Fig. 3 zeigt eine alternative Variante eines Drehschwingungsdämpfers, bei dem die Lagerelemente 5', 6' derart ausgebildet sind, dass sie in radial innere Eckbereiche 16, 17 der Dämpferkammer 2 zwischen zwei dem Schwungring 3 und dem Dämpfergehäuse 1 eingesetzt werden.

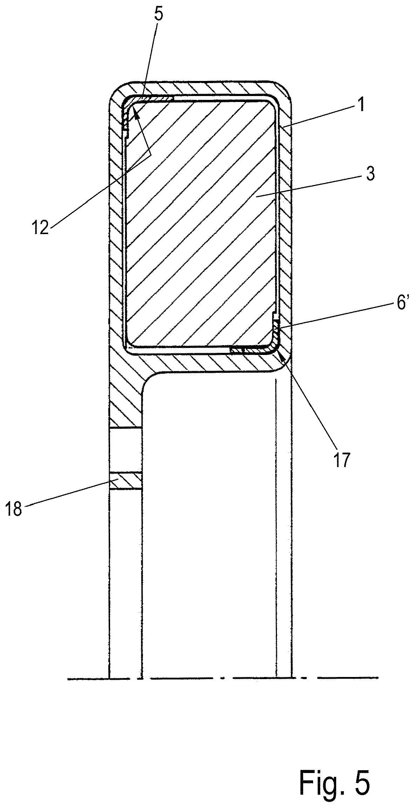

Eine Variante des Lagerelements zeigt Fig. 5. Das Lagerelement der Fig. 5 ist dazu geeignet, in einen Viskositäts-Drehschwingungsdämpfer eingesetzt zu werden, wie er in Fig. 2 dargestellt ist. Ansonsten entspricht der Aufbau des Viskositäts-Drehschwingungsdämpfers der Fig. 2 dem der Fig. 1.

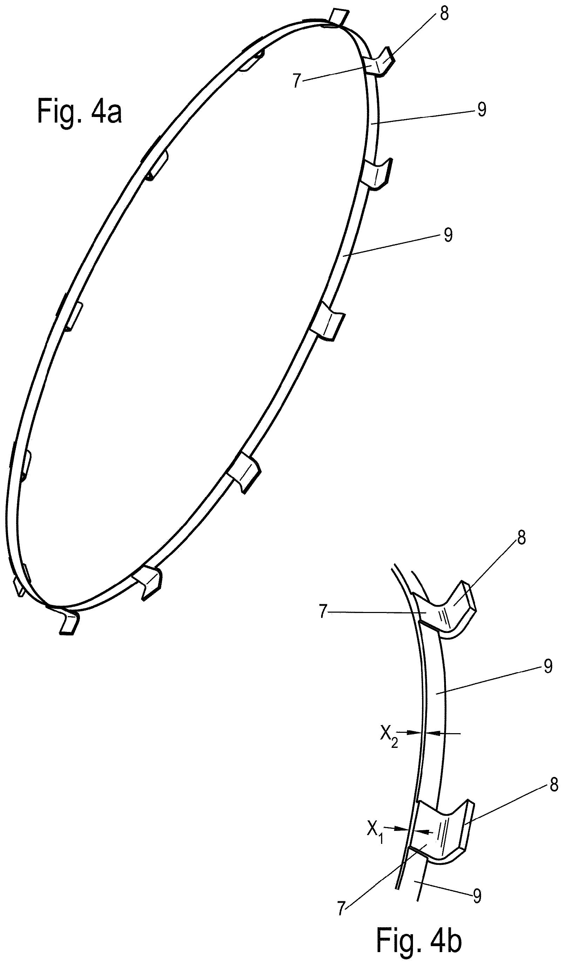

Fig. 5 zeigt eine weitere Variante, bei dem das eine Lagerelement 5 nach Art der Fig. 2 ausgebildet ist und in einen äußeren Eckbereich 11 der Dämpferkammer 2 eingesetzt ist, wohingegen das andere Lagerelement nach Art der Fig. 4 ausgebildet ist, und in einen inneren Eckbereich 17 der Dämpferkammer 2 eingesetzt ist. Dabei liegen sich die Lagerelemente 5, 6 diagonal gegenüber, d.h. sie sind in diagonal gegenüberliegende der Eckbereiche 12, 17 der Dämpferkammer 2 eingesetzt.

Es ist auch denkbar, die Axiallagerabschnitte 8 und die Radiallagerabschnitte 7 der Lagerelemente 5, 6 nicht jeweils durch Axialstege 10 und Radialstege 9 miteinander zu verbinden, sondern nur eine Art der verbindenden Radialstege 9 und Axialstege 10 vorzusehen, so die Axialstege 10 oder die Radialstege 9. So ist nach Fig. 4 vorgesehen, dass nur die Radiallagerabschnitte 9 durch Radialstege 10 miteinander verbunden sind.

Denkbar ist schließlich auch - nicht dargestellt - die Axiallagerabschnitte 8 und die Radiallagerabschnitte 7 nicht an gleichen Stellen des Umfangs vorzusehen, sondern umfangsversetzt zueinander. In diesem Fall würden beispielsweise an dem Lagerelement in Abständen von 40° Axiallagerabschnitte 8 ausgebildet sein und winkelversetzt um 20° dazu jeweils Radiallagerabschnitte 7. Die Axial- und Radiallagerabschnitte 7, 8 weisen dabei dann wiederum eine größere Banddicke auf als die sie verbindenden Axialstege und/oder Radialstege 10, 9.

Das Dämpfergehäuse 1 weist nach Fig.1, 2 und 3 jeweils wenigstens einen Abschnitt zur Montage an der (nicht dargestellten) Maschinenwelle auf. Hier ist dieser Abschnitt jeweils ein Flansch 18, der sich radial nach innen erstreckt.

### Bezugszeichenliste

- 1: Dämpfergehäuse
- 2: Dämpferkammer
- 3: Schwungring
- 4: Scherspalt
- 4a, b: Scherspalt-Radialbereiche
- 4c, 4d: Scherspalt-Axialbereiche
- 5,5': Lagerelement
- 6,6': Lagerelement
- 7: Radiallagerabschnitt
- 8: Axiallagerabschnitt
- 9: Radialsteg
- 10: Axialsteg
- 11: Brückensteg
- 12: Eckbereich
- 13: Eckbereich
- 14: Aussparung
- 15: Aussparung
- 16: Eckbereich
- 17: Eckbereich
- 18: Flansch
- X1, Y1: Banddicke
- X2,Y2: Banddicke

## Patentansprüche

1. Viskositäts-Drehschwingungsdämpfer, der folgende Merkmale aufweist:
a) ein ringförmiges Dämpfergehäuse (1) mit einer Innenwand, das eine Dämpferkammer (2) begrenzt;
b) ein in der Dämpferkammer (2) angeordneter Schwungring (3);
c) eine den Schwungring (3) im Dämpfergehäuse lagernde Lagereinrichtung, die lose - d.h. ohne Vorspannung - zwischen dem Schwungring (3) und der Innenwand des Dämpfergehäuses 1 angeordnet ist und.die wenigstens ein Lagerelement (5, 6; 5', 6') aufweist, das einen Axiallagerabschnitt (8) und/oder einen Radiallagerabschnitt (7) aufweist,
d) ein mit einem viskosen Fluid gefüllter Scherspalt (4) zwischen dem Schwungring (3) und der Innenwand des Dämpfergehäuses (1),
e) umfangsverteilt an dem wenigstens einen Lagerelement (5, 6; 5', 6') mehrere der Axiallagerabschnitte (8) und/oder mehrere der Radiallagerabschnitte (7) vorgesehen sind,
f) wobei das wenigstens eine Lagerelement (5, 6; 5', 6') ferner mehrere Materialstege aufweist, welche jeweils zwei der Axiallagerabschnitte oder zwei der der Radiallagerabschnitte miteinander verbinden,
**dadurch gekennzeichnet, dass**
g) wobei mehrere der Axiallagerabschnitte (8) durch die Materialstege miteinander verbunden sind und die Materialstege als Axialstege (10) ausgebildet sind, und/oder wobei mehrere der Radiallagerabschnitte (7) durch die Materialstege miteinander verbunden sind und die Materialstege als Radialstege (9) ausgebildet sind, wobei eine Banddicke des Lagerelements (5, 6; 5', 6') im Bereich der Materialstege (10, 9) geringer ist als eine Banddicke (X2, Y2) in den Axiallagerabschnitten (8) und/oder in den Radiallagerabschnitten (7).

2. Viskositäts-Drehschwingungsdämpfer nach Anspruch 1, **dadurch gekennzeichnet, dass** sich jeweils umfangsverteilt die Radiallagerabschnitte (7) und die Axiallagerabschnitte (8) zu im Querschnitt L-förmigen Lagerabschnitten ergänzen.

3. Viskositäts-Drehschwingungsdämpfer nach einem oder mehreren der vorstehenden Ansprüche, **dadurch gekennzeichnet, dass** zwei der Lagerelemente (5, 6; 5', 6') in der Dämpferkammer angeordnet sind.

4. Viskositäts-Drehschwingungsdämpfer nach einem oder mehreren der vorstehenden Ansprüche, **dadurch gekennzeichnet, dass** die Dämpferkammer einen im Wesentlichen rechteckigen Querschnitt mit inneren und äußeren Eckbereichen (12, 13, 16, 17) aufweist.

5. Viskositäts-Drehschwingungsdämpfer nach Anspruch 4, **dadurch gekennzeichnet, dass** zwei der Lagerelemente (5, 6; 5', 6') in den äußeren Eckbereichen (12, 13) der Dämpferkammer (2) zwischen dem Dämpfergehäuse (1) und dem Schwungring (3) angeordnet sind und/oder dass zwei der Lagerelemente (5', 6') in den inneren Eckbereichen (16, 17) der Dämpferkammer (2) zwischen dem Dämpfergehäuse (1) und dem Schwungring (3) angeordnet sind.

6. Viskositäts-Drehschwingungsdämpfer nach Anspruch 4, **dadurch gekennzeichnet, dass** eines der Lagerelemente (5') in einem der äußeren Eckbereiche (12) angeordnet ist und dass ein weiteres der Lagerelemente (6') in einem der inneren Eckbereiche der Dämpferkammer (2) zwischen dem Dämpfergehäuse (1) und dem Schwungring (3) angeordnet ist, vorzugsweise derart, dass die Lagerelemente (5, 6; 5', 6') in diagonal einander in der Dämpferkammer (2) gegenüberliegenden Eckbereichen angeordnet sind.

7. Viskositäts-Drehschwingungsdämpfer nach einem oder mehreren der vorstehenden Ansprüche, **dadurch gekennzeichnet, dass** die Lagereinrichtung ohne Vorspannung zwischen dem Dämpfergehäuse (1) und dem Schwungring (3) angeordnet ist.

8. Viskositäts-Drehschwingungsdämpfer nach einem der vorstehenden Ansprüche, **dadurch gekennzeichnet, dass** wenigstens eines der Lagerelemente (5, 6; 5', 6') lediglich Axiallagerabschnitte (8) und nur diese verbindende Axialstege (10) aufweist und/oder eines der Lagerelemente (5, 6; 5', 6') lediglich Radiallagerabschnitte (7) und nur diese verbindende Radialstege (9) aufweist.

9. Viskositäts-Drehschwingungsdämpfer nach einem der vorstehenden Ansprüche, **dadurch gekennzeichnet, dass** die Lagerelemente (5, 6) jeweils einstückig ausgebildet sind und/oder aus Kunststoff bestehen.

10. Viskositäts-Drehschwingungsdämpfer nach einem der vorstehenden Ansprüche, **dadurch gekennzeichnet, dass** wenigstens eines der Lagerelemente (5, 6; 5', 6') als in einem montierten Zustand umfangsgeschlossener Ring ausgebildet ist und/oder dass wenigstens eines der Lagerelemente (5, 6; 5', 6') als in einem montierten Zustand nicht umfangsgeschlossener Ring ausgebildet ist.

11. Viskositäts-Drehschwingungsdämpfer nach einem der vorstehenden Ansprüche, **dadurch gekennzeichnet, dass** wenigstens drei der Axiallagerabschnitte (8) und/oder der Radiallagerabschnitte (7) umfangsverteilt an dem einen oder den zwei oder mehr Lagerelementen (5, 6; 5', 6') vorgesehen sind.

## Claims

1. A viscous torsional vibration damper having the following features:
a) an annular damper housing (1) having an internal wall that delimits a damper chamber (2);
b) an inertia ring (3) arranged in the damper chamber (2);
c) a bearing device that supports the inertia ring (3) in the damper housing, is arranged loose - i.e. not pre-tensioned - between the inertia ring (3) and the internal wall of the damper housing (1), and has at least one bearing element (5, 6; 5', 6') comprising an axial bearing portion (8) and/or a radial bearing portion (7);
d) a shear gap (4) that is located between the inertia ring (3) and the internal wall of the damper housing (1) and filled with a viscous fluid,
e) a plurality of the axial bearing portions (8) and/or a plurality of the radial bearing portions (7) that are distributed around the circumference of the at least one bearing element (5, 6; 5', 6'),
f) the at least one bearing element (5, 6; 5', 6') further having a plurality of material webs that connect together either two of the axial bearing portions or two of the radial bearing portions,
**characterised in that**
g) a plurality of the axial bearing portions (8) are connected to one another by the material webs and the material webs are designed as axial webs (10) and/or a plurality of the radial bearing portions (7) are connected to one another by the material webs and the material webs are designed as radial webs (9), the strip thickness of the bearing elements (5, 6; 5' 6') in the region of the material webs (10, 9) being less than the strip thickness (X2, Y2) in the axial bearing portions (8) and/or in the radial bearing portions (7).

2. A viscous torsional vibration damper according to claim 1, **characterised in that** the circumferentially distributed radial bearing portions (7) and axial bearing portions (8) complement one another to form bearing portions with an L-shaped cross-section.

3. A viscous torsional vibration damper according to one of more of the preceding claims, **characterised in that** two of the bearing elements (5, 6; 5', 6') are arranged in the damper chamber.

4. A viscous torsional vibration damper according to one or more of the preceding claims, **characterised in that** the damper chamber has a substantially rectangular cross-section with inner and outer corner regions (12, 13, 16, 17).

5. A viscous torsional vibration damper according to claim 4, **characterised in that** two of the bearing elements (5, 6; 5', 6') are arranged in the outer corner regions (12, 13) of the damper chamber (2) between the damper housing (1) and the inertia ring (3) and/or that two of the bearing elements (5', 6') are arranged in the inner corner regions (16, 17) of the damper chamber (2) between the damper housing (1) and the inertia ring (3)

6. A viscous torsional vibration damper according to claim 4, **characterised in that** one of the bearing elements (5') is arranged in one of the outer corner regions (12) and that a further bearing element (6') is arranged in one of the inner corner regions of the damper chamber (2) between the damper housing (1) and the inertia ring (3), preferably in such a manner that the bearing elements (5, 6; 5', 6') are arranged in diagonally opposing corner regions of the damper chamber (2).

7. A viscous torsional vibration damper according to one or more of the preceding claims, **characterised in that** the bearing device is arranged not pre-tensioned between the damper housing (1) and the inertia ring (3).

8. A viscous torsional vibration damper according to any one of the preceding claims, **characterised in that** at least one of the bearing elements (5, 6; 5', 6') comprises only axial bearing portions (8) and the axial webs (10) that connect them and/or that one of the bearing elements (5, 6; 5', 6') comprises only radial bearing portions (7) and the radial webs (9) that connect them.

9. A viscous torsional vibration damper according to any of the preceding claims, **characterised in that** the bearing elements (5, 6) are each configured as one piece and/or made of plastic.

10. A viscous torsional vibration damper according to any of the preceding claims, **characterised in that** at least one of the bearing elements (5, 6; 5', 6') is configured as a ring that is circumferentially closed when assembled and/or that at least one of the bearing elements (5, 6; 5', 6') is configured as a ring that is not circumferentially closed when assembled.

11. A viscous torsional vibration damper according to any one of the preceding claims, **characterised in that** at least three of the axial bearing portions (8) and/or of the radial bearing portions (7) are distributed around the circumference of the one or the two or more bearing elements (5, 6; 5', 6').

## Revendications

1. Amortisseur de vibrations de torsion à viscosité, qui a les caractéristiques suivantes :
a) un boîtier (1) annulaire d'amortisseur, qui a une paroi intérieure et qui délimite une chambre (2) d'amortisseur ;
b) un volant (3), disposé dans la chambre (2) de l'amortisseur ;
c) un dispositif de palier, par lequel le volant (3) est monté dans le boîtier de l'amortisseur, qui est disposé de manière lâche - c'est-à-dire sans précontrainte - entre le volant (3) et la paroi intérieure du boîtier (1) de l'amortisseur, et qui a au moins un élément (5, 6 ; 5', 6') de palier ayant une partie (8) de palier axial et/ou une partie (7) de palier radial,
d) un intervalle (4) de cisaillement empli d'un fluide visqueux entre le volant (3) et la paroi intérieure du boîtier (1) de l'amortisseur,
e) répartis sur la périphérie sur le au moins un élément (5, 6 ; 5', 6') de palier, sont prévus plusieurs des parties (8) de palier axial et/ou plusieurs des parties (7) de palier radial,
f) dans lequel le au moins un élément (5, 6 ; 5', 6') de palier a, en outre, plusieurs entretoises de matériau, qui relient entre elles, respectivement, deux des parties de palier axial ou deux des parties de palier radial,
**caractérisé en ce que**
g) dans lequel plusieurs des parties (8) de palier axial sont reliées entre elles par les entretoises de matériau et les entretoises de matériau sont constituées en entretoises axiales et/ou, dans lequel plusieurs des parties (7) de palier radial sont reliées entre elles par les entretoises de matériau et les entretoises de matériau sont constituées en entretoises (9) radiales, une épaisseur de bande de l'élément (5, 6 ; 5', 6') de palier, dans la région des entretoises (10, 9) de matériau, étant plus petite qu'une épaisseur (X2, Y2) de bande dans les parties (8) de palier axial et/ou dans les parties (7) de palier radial.

2. Amortisseur de vibrations de torsion à viscosité suivant la revendication 1, **caractérisé en ce que**, respectivement réparties sur le pourtour, les parties (7) de palier radial et les partie (8) de palier axial se complètent en des parties de palier en forme de L en section transversale.

3. Amortisseur de vibrations de torsion à viscosité suivant l'une ou plusieurs des revendications précédentes, **caractérisé en ce que** deux des éléments (5, 6 ; 5', 6') de palier sont disposés dans la chambre de l'amortisseur.

4. Amortisseur de vibrations de torsion à viscosité suivant l'une ou plusieurs des revendications précédentes, **caractérisé en ce que** la chambre de l'amortisseur a une section transversale sensiblement rectangulaire, ayant des parties (12, 13, 16, 17) de sommet intérieures et extérieures.

5. Amortisseur de vibrations de torsion à viscosité suivant la revendication 4, **caractérisé en ce que** deux des éléments (5, 6 ; 5', 6') de palier sont disposés dans les parties (12, 13) de sommet extérieures de la chambre (2) de l'amortisseur, entre le boîtier (1) de l'amortisseur et le volant (3) et/ou **en ce que** deux des éléments (5', 6') de palier sont disposés dans les parties (16, 17) de sommet intérieures de la chambre (2) de l'amortisseur, entre le boîtier (1) de l'amortisseur et le volant (3).

6. Amortisseur de vibrations de torsion à viscosité suivant la revendication 4, **caractérisé en ce que** l'un des éléments (5') de palier est disposé dans l'une des parties (12) de sommet extérieures et **en ce qu'**un autre des éléments (6') de palier est disposé dans l'une des parties de sommet intérieures de la chambre (2) de l'amortisseur, entre le boîtier (1) de l'amortisseur et le volant (3), de préférence de manière à ce que les éléments (5, 6 ; 5', 6') de palier soient disposés dans des parties de sommet opposées l'une à l'autre en diagonal dans la chambre (2) de l'amortisseur.

7. Amortisseur de vibrations de torsion à viscosité suivant l'une ou plusieurs des revendications précédentes, **caractérisé en ce que** le dispositif de palier est disposé sans précontrainte entre le boîtier (1) de l'amortisseur et le volant (3).

8. Amortisseur de vibrations de torsion à viscosité suivant l'une des revendications précédentes, **caractérisé en ce qu'**au moins l'un des éléments (5, 6 ; 5', 6') de palier a seulement des parties (8) de palier axial et des entretoises (10) axiales reliant seulement celles-ci et/ou l'un des éléments (5, 6 ; 5', 6') de palier à seulement des parties (7) de palier radial et des entretoises (9) radiales reliant seulement celles-ci.

9. Amortisseur de vibrations de torsion à viscosité suivant l'une des revendications précédentes, **caractérisé en ce que** les éléments (5, 6) de palier sont constitués chacun en une seule pièce et/ou sont en matière plastique.

10. Amortisseur de vibrations de torsion à viscosité suivant l'une des revendications précédentes, **caractérisé en ce qu'**au moins l'un des éléments (5, 6 ; 5', 6') de palier est constitué sous la forme d'un cerceau fermé en pourtour dans un état monté et/ou le au moins un des éléments (5, 6 ; 5', 6') de palier est constitué sous la forme d'un cerceau non fermé sur le pourtour dans un état monté.

11. Amortisseur de vibrations de torsion à viscosité suivant l'une des revendications précédentes, **caractérisé en ce qu'**il est prévu au moins trois des parties (8) de palier axial et/ou des parties (7) de palier radial réparties sur le pourtour sur le un ou sur les deux ou plus d'éléments (5, 6 ; 5',6') de palier.
